# FASCICULE DE BREVET EUROPEEN

(11) **EP 1 270 962 B1**
(45) Date de publication et mention de la délivrance du brevet: **23.09.2009**
(21) Numéro de dépôt: 02291450.1
(22) Date de dépôt: 11.06.2002
(51) Int. Cl.: F16B 21/18, F16C 11/02

(54) **Dispositif de liaison mécanique sécurisé**
Gesicherte, mechanische Verbindungsvorrichtung
Secured mechanical connection device

(30) Priorité: 20.06.2001 FR 0108123
(43) Date de publication de la demande: 02.01.2003
(73) Titulaire: Lisi Automotive Rapid, 95650 Puiseux Pontoise (FR)
(72) Inventeur: Leon, Jean-Pierre René, 78800 Houilles (FR); Balibrea, Jean, 95430 Auvers sur Oise (FR)
(74) Mandataire: Berger, Helmut

(56) Documents cités:
- EP-A- 0 279 869
- FR-A- 2 762 651
- FR-A- 2 795 783
- US-A- 3 812 756

## Description

La présente invention concerne, de façon générale, un dispositif de liaison mécanique, par exemple utilisable dans les systèmes de freinage pour relier, avec un certain débattement angulaire possible, la tige du servomoteur d'assistance de freinage au levier de la pédale de frein.

Plus précisément, l'invention concerne un dispositif de liaison mécanique pour relier un levier percé d'un orifice à une chape montée à une extrémité d'une tige, la chape comprenant des première et seconde joues parallèles l'une à l'autre et respectivement traversées par des premier et second perçages disposés en regard l'un de l'autre, et le levier étant sélectivement engagé et maintenu entre les joues de la chape dans une position pour laquelle l'orifice du levier est aligné avec les perçages de la chape, ce dispositif comprenant un axe et une pièce de liaison, l'axe traversant le premier perçage, l'orifice du levier, et le second perçage et présentant des première et seconde extrémités dépassant respectivement des première et seconde joues, et la pièce de liaison étant solidaire de la première extrémité de l'axe et sélectivement immobilisée par rapport à la chape, au moins par butée sur cette dernière.

Des dispositifs de ce type sont bien connus dans l'art antérieur, tel qu'illustré par exemple par le brevet FR 2 795 783.

En dépit de leur relative simplicité structurelle, ces dispositifs doivent remplir une fonction de maintien qui peut être tout à fait cruciale, comme c'est le cas de la fixation d'un levier de pédale de frein sur la chape de la tige de commande de freinage.

L'invention se situe dans ce contexte et a pour but de proposer un dispositif de liaison mécanique assurant correctement sa fonction, même en cas de montage partiellement défectueux.

Le dispositif de l'invention, par ailleurs conforme à la définition générique qu'en donne le préambule ci-dessus, est essentiellement caractérisé en ce que l'axe présente, à sa seconde extrémité, un organe formant butée élastique.

Ainsi, même dans le cas où le dispositif de liaison de l'invention n'est monté par erreur que par insertion de l'axe dans la chape, l'axe relie de façon sûre le levier à la chape grâce à la butée que forme la pièce de liaison du côté de la première extrémité de l'axe, et à la butée élastique du côté de la seconde extrémité de l'axe.

Par ailleurs, il est avantageux de prévoir que la pièce de liaison présente une pince élastique, engagée sur la chape ou sur la tige par rotation de ce dispositif autour de l'axe.

De préférence, l'organe formant butée élastique oppose respectivement à son insertion dans le second perçage, et à son extraction du second perçage, des première et seconde forces résistantes dont la seconde est supérieure à la première.

Selon un mode de réalisation possible de l'invention, l'organe formant butée élastique peut comprendre une bague ouverte, radialement élastique, engagée dans une gorge annulaire creusée dans la seconde extrémité de l'axe.

Selon au moins un autre mode de réalisation possible de l'invention, l'organe formant butée élastique peut comprendre une rondelle présentant des pattes élastiques inclinées par rapport à l'axe et s'étendant dans une section de diamètre restreint de l'axe.

Dans ce cas, la rondelle peut présenter des reliefs internes maintenus prisonniers dans une gorge annulaire creusée dans la seconde extrémité de l'axe, ces reliefs internes étant par exemple formés par des replis de pattes repliées.

En variante, la rondelle peut être sertie sur la seconde extrémité de l'axe.

Enfin, la pièce de liaison présente avantageusement un cliquet qui, lorsque la pince élastique est engagée à fond sur un bord de la première joue par rotation de la pièce de liaison autour de l'axe, vient en butée sur un bord opposé de cette joue pour empêcher tout mouvement de rotation intempestif inverse de ce dispositif autour de l'axe.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en perspective éclatée d'un levier, d'une chape, et d'un dispositif de liaison conforme à un premier mode de réalisation possible de l'invention, avant fixation du levier sur la chape par ce dispositif;
- la figure 2 est une vue en perspective d'un levier assemblé à une chape par le dispositif illustré à la figure 1;
- la figure 3 est une vue en perspective agrandie et sous un angle différent du dispositif de liaison illustré à la figure 1;
- la figure 4 est une vue de côté du dispositif illustré à la figure 3;
- la figure 5 est une vue en perspective agrandie d'un dispositif de liaison conforme à un second mode de réalisation possible de l'invention;
- la figure 6 est une vue de côté du dispositif illustré à la figure 5;
- la figure 7 est une vue en perspective agrandie d'un dispositif de liaison conforme à un troisième mode de réalisation possible de l'invention;
- la figure 8 est une vue de côté de l'axe du dispositif illustré à la figure 7;
- la figure 9 est une vue en coupe agrandie de la rondelle du dispositif illustré à la figure 7, la coupe étant observée suivant l'incidence définie par les flèches IX-IX de la figure 8;
- la figure 10 est une vue en coupe agrandie de la rondelle du dispositif illustré à la figure 7, la coupe étant observée suivant l'incidence définie par les flèches X-X de la figure 8; et
- la figure 11 est une vue de côté agrandie d'un dispositif de liaison conforme à un quatrième mode de réalisation possible de l'invention.

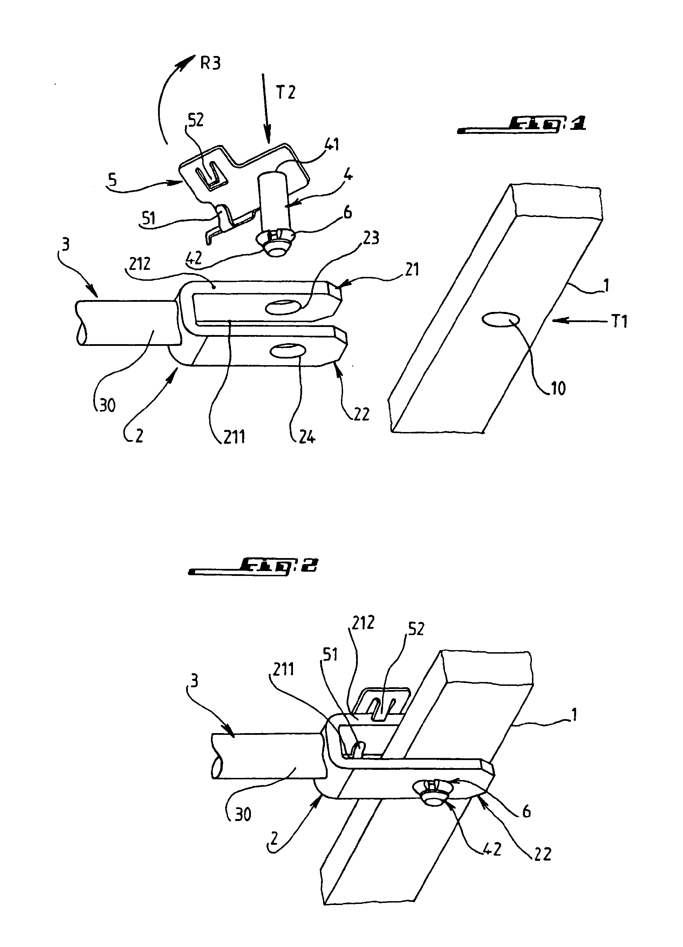

L'invention concerne un dispositif de liaison mécanique pour relier, avec une certaine liberté de pivotement, un levier 1 (figures 1 et 2) à une chape 2 solidaire d'une extrémité 30 d'une tige 3, ce dispositif comprenant essentiellement un axe transversal 4 et une pièce de liaison 5.

La chape 2 comprend des joues 21 et 22 entre lesquelles le levier 2 vient s'engager lors du montage, ces joues étant parallèles l'une à l'autre et à la direction axiale de la tige 3.

Les joues 21 et 22 de la chape 2 sont par ailleurs respectivement traversées par des perçages 23 et 24 disposés en regard l'un de l'autre, le levier 1 étant lui-même, de façon connue, percé d'un orifice 10 susceptible de venir en alignement avec les perçages 23 et 24.

La pièce de liaison 5 est par exemple sertie sur la première extrémité 41 de l'axe 4.

Dans ces conditions, l'assemblage du levier 1 et de la chape 2 s'opère, de façon connue, en engageant l'axe 4 à la fois dans le perçage 23 de la joue 21 de la chape 2, dans l'orifice 10 du levier 1, et dans le perçage 24 de la joue 22 de la chape.

L'axe 4 présente une longueur telle qu'après cette opération, les extrémités 41 et 42 de cet axe 4 dépassent simultanément de part et d'autre de la chape 2, c'est-à-dire vers l'extérieur des joues correspondantes 21 et 22 de cette chape.

Après l'insertion de l'axe 4 dans les perçages 23 et 24 de la chape, de part et d'autre de l'orifice 10 du levier 1, la pièce de liaison 5 est rendue solidaire de la chape 2, soit directement, soit par accrochage sur la tige 3.

Dans le dispositif de l'invention, l'axe 4 présente, à son extrémité 42 éloignée de la pièce de liaison 5, un organe 6 formant butée élastique, et la pièce de liaison 5 présente une pince élastique 51, qui est engagée sur la chape 2 ou sur la tige 3 par une rotation du dispositif autour de l'axe 4, comme indiqué par la flèche R3 de la figure 1.

Comme le montrent les figures 1 à 4, l'organe 6 peut être constituée par une bague 61 ouverte, radialement élastique, qui est engagée dans une gorge annulaire 40, creusée dans l'extrémité 42 de l'axe 4.

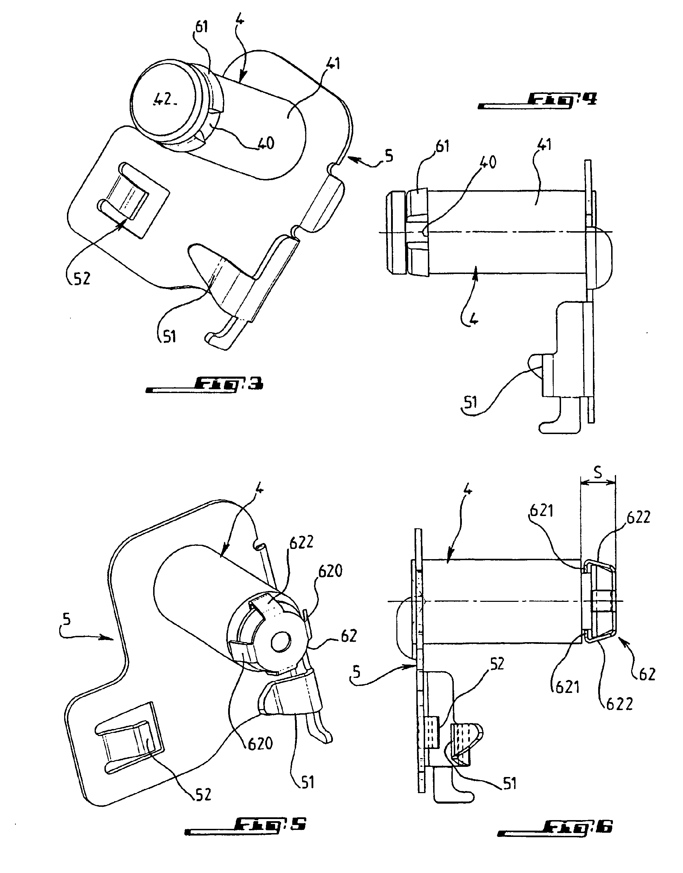

La bague est de préférence de forme essentiellement tronconique (figure 4) et présente, en direction de l'extrémité 41 de l'axe 4, à la fois un bord franc et son plus grand encombrement diamétral, de sorte qu'elle n'oppose à son insertion dans le perçage 24 de la joue 22 qu'une force résistante F1 relativement faible, alors qu'elle oppose à son extraction de ce perçage 24 une force résistante F2 relativement forte, et donc supérieure à la force d'insertion F1.

L'assemblage du levier 1 sur la chape 2 au moyen du dispositif de l'invention est ainsi aisément réalisé par la séquence de mouvements repérés par les références T1, T2, et R3 sur la figure 1, à savoir une translation T1 permettant d'aligner l'orifice 10 du levier 1 avec les perçages 23 et 24 de la chape 2, une translation T2 permettant d'engager l'axe 4, par son extrémité 42, successivement dans le perçage 23, dans l'orifice 10, et dans le perçage 24, et une rotation R3 autour de l'axe 4, effectuée une fois que l'extrémité 42 de cet axe a traversé le perçage 24, et permettant d'engager la pince élastique 51 sur un bord 211 de la joue 21 de la chape 2.

Les figures 5 à 11 illustrent, de façon non limitative, diverses variantes de réalisation de l'organe 6 formant butée élastique, cet organe prenant en l'occurrence la forme d'une rondelle telle que 62, 63 ou 64, pourvue de pattes élastiques telles que 620, 630 ou 640, qui sont inclinées par rapport à l'axe 4 en présentant le plus grand encombrement vers l'extrémité 41 de l'axe 4, et qui s'étendent dans une section terminale S de l'axe 4, où ce dernier présente un diamètre restreint pour permettre le repliement de ces pattes à la traversée des perçages 23 et 24 et de l'orifice 10.

Dans le mode de réalisation illustré aux figures 5 et 6, la rondelle 62 présente, en plus de ses pattes élastiques 620, des pattes de maintien 622 angulairement décalées par rapport aux pattes élastiques, et repliées de manière à former, par leurs replis 621, des reliefs internes qui sont engagés dans la gorge annulaire 40 creusée dans l'extrémité 42 de l'axe 4, et qui sont maintenus prisonniers de cette gorge.

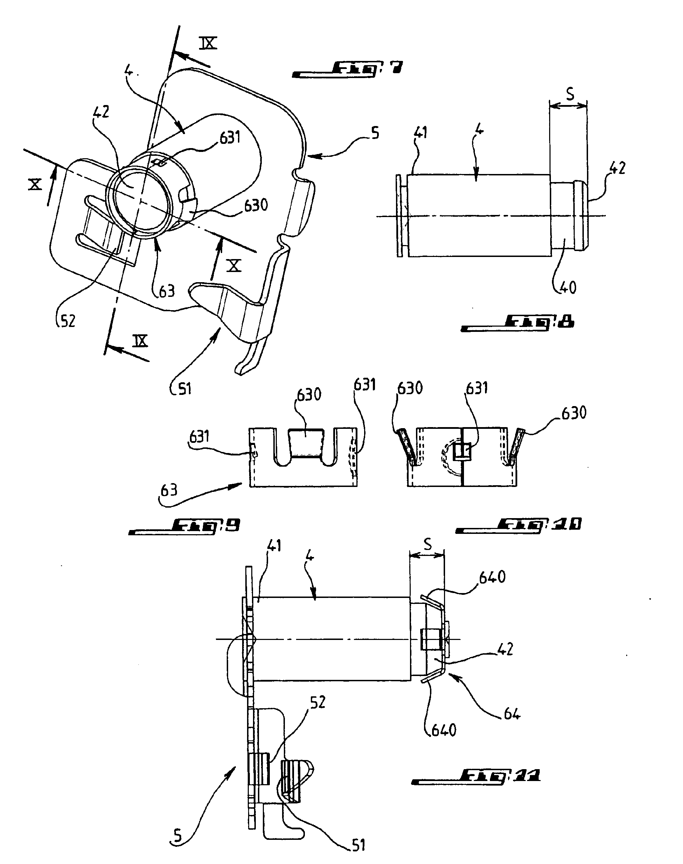

Dans le mode de réalisation illustré aux figures 7 à 9, la rondelle 63 forme une couronne et présente également, en plus de ses pattes élastiques 630, des reliefs internes 631 engagés et maintenus prisonniers dans la gorge annulaire 40 de l'axe 4.

Enfin, dans le mode de réalisation illustré à la figure 11, la rondelle 64 est simplement sertie sur l'extrémité 42 de l'axe 4.

Par ailleurs, comme le montrent les figures 1 à 3, 5 et 7, la pièce de liaison 5 présente très avantageusement un cliquet 52 par exemple obtenu par estampage.

Lorsque la pince élastique 51 est engagée à fond sur le bord 211 de la joue 21 de la chape 2, ce cliquet 52 vient en butée sur le bord opposé 212 de cette joue 21 (figure 2) et empêche ainsi tout mouvement de rotation spontané et de sens inverse du dispositif autour de l'axe 4.

Enfin, comme le montrent le mieux les figures 3, 5 et 7, la pièce de liaison est de préférence formée en une seule pièce par découpage et pliage d'un flan métallique intrinsèquement élastique ou rendu élastique par trempe thermique.

## Revendications

1. Agencement comportant un levier (1) percé d'un orifice (10), une chape (2) montée à une extrémité (30) d'une tige (3) et un dispositif de liaison mécanique du levier à la chape (2), la chape comprenant des première et seconde joues (21, 22) parallèles l'une à l'autre et respectivement traversées par des premier et second perçages (23, 24) disposés en regard l'un de l'autre, et le levier (1)étant sélectivement engagé et maintenu entre les joues (21, 22) de la chape (2) dans une position pour laquelle l'orifice (10)du levier (1) est aligné avec les perçages (23, 24) de la chape (2), le dispositif de liaison comprenant un axe (4) et une pièce de liaison (5), l'axe (4) traversant le premier perçage (23), l'orifice (10) du levier, et le second perçage (24) et présentant des première et seconde extrémités (41, 42), dépassant respectivement des première et seconde joues (21, 22), la pièce de liaison (5)état solidaire de la première extrémité (41) de l'axe (4) et sélectivement immobilisée par rapport à la chape (2) par un organe de butée (6) prévu sur la seconde extrémité (42) de l'axe, **caractérisé en ce que** l'organe forme une butée élastique, comprenant une bague (61) ouverte, radialement élastique, engagée dans une gorge annulaire (40) creusée dans la seconde extrémité (42) de l'axe (4), et opposant respectivement à son insertion dans le second perçage (24), et à son extraction du second perçage (24), des première et seconde forces résistantes (F1, F2) dont la seconde (F2) est supérieure à la première (F1)et **caractérisé en ce que** la bague (61) a une forme essentiellement tronconique dont le diamètre augmente en direction de la seconde extrémité et est élastiquement variable.

2. Agencement suivant la revendication 1, **caractérisé en ce que** la pièce de liaison (5) présente une pince élastique (51), engagée sur la chape (2) ou sur la tige (3) par rotation (R3) de ce dispositif autour de l'axe (4).

3. Agencement suivant l'une quelconque des revendications précédentes, **caractérisé en ce que** la pièce de liaison (5) présente un cliquet (52) qui, lorsque la pince élastique (51) est engagée à fond sur un bord (211) de la première joue (21), vient en butée sur un bord opposé (212) de cette joue (21) pour empêcher tout mouvement de rotation intempestif de ce dispositif autour de l'axe (4).

4. Agencement selon l'une des revendications 1 à 3, **caractérisé en ce que** la bague présente la forme d'une rondelle (62, 63) pourvue de pattes élastiques (620, 630, 640), qui sont inclinées par rapport à l'axe (4) en présentant le plus grand encombrement vers l'extrémité (41) de la première extrémité (41) de l'axe (4).

5. Agencement selon la revendication 4, **caractérisé en ce que** la rondelle (62) comporte, en plus des pinces élastiques (620) des pinces de maintien (622) angulairement décalées par rapport aux pattes élastiques et pourvues à leurs extrémités des replis s'engageant dans la gorge annulaire (40).

6. Agencement selon la revendication 5 **caractérisé en ce que** la rondelle (63) présente le forum d'une couronne comprenant en plus des pinces élastiques (630) précitées des reliefs internes (631) engagés et maintenus prisonniers dans la gorge annuaire (40).

## Claims

1. An arrangement, comprising a lever (1), in which an orifice (10) has been pierced, a clevis (2) mounted at one end (30) of a rod (3), and a device for mechanically connecting the lever to the clevis (2), the clevis comprising first and second jaws (21, 22), which are parallel to each other and through which respectively first and second bores (23, 24) are made, which are arranged facing each other, and the lever (1) is selectively engaged and maintained between the jaws (21, 22) of the clevis (2) in a position, for which the orifice (10) of the lever (1) is aligned with the bores (23, 24) of the clevis (2), the connecting device comprising an axis (4) and a connecting piece (5), with the axis (4) going through the first bore (23), the orifice (10) of the lever, and the second bore (24), and having first and second ends (41, 42), which respectively protrude from the first and second jaws (21, 22), the connecting piece (5) being integral with the first end (41) of the axis (4) and selectively immobilized with respect to the clevis (2) by an stop member (6) provided at the second end (42) of the axis, **characterized in that** the member forms an elastic stop comprising an open radially elastic ring (61) engaged in a ring groove (40) made in the second end (42) of the axis (4) is made, and respectively opposing to the insertion thereof into the second bore (24) and the extraction thereof from the second bore (24) first and second resisting forces (F1, F2), of which the second one (F2) is greater than the first one (F1), and **characterized in that** the ring (61) has a substantially truncated shape, the diameter of which is increasing towards the second end while being elastically variable.

2. The arrangement according to claim 1, **characterized in that** the connecting piece (5) has an elastic clip (51) engaged at the clevis (2) or at the rod (3) by rotating (R3) the device about the axis (4).

3. The arrangement according to any of the preceding claims, **characterized in that** the connecting piece (5) has a pawl (52), which when the elastic clip (51) is fully engaged on one edge (211) of the first jaw (21), comes into abutment on an opposite edge (212) of this jaw (21) so as to prevent untimely rotation of the device about the axis (4).

4. The arrangement according to any of claims 1 to 3, **characterized in that** the ring has the shape of a washer (62, 63) provided with elastic tabs (620, 630, 640) which are inclined with respect to the axis (4) by having the largest bulk thereof towards the end (41) of the first end (41) of the axis (4).

5. The arrangement according to claim 4, **characterized in that** the washer (62) comprises in addition to the elastic clips (620) holding clips (622) angularly offset with respect to the elastic tabs and provided at the ends thereof with folds engaging into the ring groove (40).

6. The arrangement according to claim 5, **characterized in that** the washer (63) has the shape of a crown which comprises in addition to said elastic tabs (630) inner raised parts (631) engaged into the ring groove (40) and held captive therein.

## Patentansprüche

1. Anordnung, umfassend einen Hebel (1), in dem eine Öffnung (10) gebohrt ist, ein Gabelstück (2), das an einem Ende (30) eines Stabs (3) angebracht ist, und eine Vorrichtung zum mechanischen Verbinden des Hebels mit dem Gabelstück (2), wobei das Gabelstück erste und zweite Backen (21, 22) umfasst, die zueinander parallel sind und durch die jeweils erste und zweite Bohrungen (23, 24) gehen, die einander gegenüber angeordnet sind, und wobei der Hebel (1) wahlweise zwischen die Backen (21, 22) des Gabelstücks (2) in Eingriff gebracht wird und in einer Position gehalten wird, für welche die Öffnung (10) des Hebels (1) mit den Bohrungen (23, 24) des Gabelstücks (2) fluchtet, wobei die Verbindungsvorrichtung eine Achse (4) und ein Verbindungsstück (5) umfasst, wobei die Achse (4) durch die erste Bohrung (23), die Öffnung (10) des Hebels und die zweite Bohrung (24) geht und erste und zweite Enden (41, 42) aufweist, die jeweils über die ersten und zweiten Backen (21, 22) hinausragen, wobei das Verbindungsstück (5) mit dem ersten Ende (41) der Achse (4) fest verbunden ist und wahlweise im Verhältnis zum Gabelstück (2) durch ein Anschlagsorgan (6) festgelegt wird, das an dem zweiten Ende (42) der Achse bereitgestellt wird, **dadurch gekennzeichnet, dass** das Organ einen elastischen Anschlag bildet, der einen offenen, radial elastischen Ring (61) umfasst, der in eine Ringnut (40) eingreift, die in dem zweiten Ende (42) der Achse (4) vertieft ist, und der jeweils seinem Einfügen in die zweite Bohrung (24) und einem Herausnehmen aus der zweiten Bohrung (24) erste und zweite Widerstandskräfte (F1, F2) entgegensetzt, von denen die zweite (F2) größer ist als die erste (F1), und **dadurch gekennzeichnet, dass** der Ring (61) eine im Wesentlichen kegelstumpfartige Form aufweist, deren Durchmesser in Richtung auf das zweite Ende zunimmt und elastisch variabel ist.

2. Anordnung nach Anspruch 1, **dadurch gekennzeichnet, dass** das Verbindungsstück (5) eine elastische Klemme (51) aufweist, die an dem Gabelstück (2) oder an dem Stab (3) durch Drehung (R3) dieser Vorrichtung um die Achse (4) herum in Eingriff gebracht wird.

3. Anordnung nach einem der vorhergehenden Ansprüche, **dadurch gekennzeichnet, dass** das Verbindungsstück (5) eine Sperre (52) aufweist, die, wenn die elastische Klemme (51) ganz auf einem Rand (211) der ersten Backe (21) in Eingriff steht, an einem gegenüberliegenden Rand (212) dieser Backe (21) anschlägt, um eine unzeitgemäße Drehbewegung dieser Vorrichtung um die Achse (4) herum zu verhindern.

4. Anordnung nach einem der Ansprüche 1 bis 3, **dadurch gekennzeichnet, dass** der Ring die Form einer runden Scheibe (62, 63) aufweist, die mit elastischen Laschen (620, 630, 640) versehen ist, die im Verhältnis zur Achse (4) geneigt sind, indem sie ihren größten Platzbedarf in Richtung auf das Ende (41) des ersten Endes (41) der Achse (4) aufweisen.

5. Anordnung nach Anspruch 4, **dadurch gekennzeichnet, dass** die runde Scheibe (62) zusätzlich zu den elastischen Klemmen (620) Halteklemmen (622) umfasst, die im Verhältnis zu den elastischen Laschen winkelmäßig versetzt sind und an ihren Enden mit Umfaltungen versehen sind, die in die Ringnut (40) eingreifen.

6. Anordnung nach Anspruch 5, **dadurch gekennzeichnet, dass** die runde Scheibe (63) die Form eines Kranzes aufweist, der zusätzlich zu den genannten elastischen Klemmen (630) innere Erhöhungen (631) umfasst, die in die Ringnut (40) in Eingriff gebracht und darin festgehalten werden.
